# EUROPEAN PATENT SPECIFICATION

(11) **EP 3 947 574 B1**
(45) Date of publication and mention of the grant of the patent: **16.10.2024**
(21) Application number: 20784947.2
(22) Date of filing: 03.04.2020
(51) Int. Cl.: C09D 5/26, C09K 5/02, F28D 20/02

(54) **COMPOSITIONS AND METHODS FOR THERMAL MANAGEMENT OF TEXTILES AND FOAMS**
ZUSAMMENSETZUNGEN UND VERFAHREN ZUR THERMISCHEN VERWALTUNG VON TEXTILIEN UND SCHÄUMEN
COMPOSITIONS ET PROCÉDÉS DE GESTION THERMIQUE DE TEXTILES ET DE MOUSSES

(30) Priority: 03.04.2019 US 201962828920 P
(43) Date of publication of application: 09.02.2022
(73) Proprietor: Alexium, Inc., Greer, SC 29650 (US)
(72) Inventor: BROOKINS, Robert N., Simpsonville, South Carolina 29681 (US); ESTES, Richard H., Moore, South Carolina 29369 (US)
(74) Representative: Weickmann & Weickmann PartmbB
(86) International application number: PCT/US2020/026662
(87) International publication number: WO 2020/206318

(56) References cited:
- WO-A1-2013/135771
- CN-A- 103 451 756
- CN-A- 106 957 635
- CN-A- 107 216 858
- FR-A1- 2 832 616
- JP-A- 2003 183 125
- US-A1- 2015 001 440
- US-A1- 2016 177 156
- US-A1- 2016 223 269
- AAMIR SHAHZAD: "Impact of Thermal Conductivity on Energy Technologies", 5 September 2018, INTECH, UK, ISBN: 978-1-78923-673-6 , article TEBOGO CLEMENT MOKHENA , MOKGAOTSA JONAS MOCHANE , JEREMIA SHALE SEFADI , SETUMO VICTOR MOTLOUG , DICKSON MUBERA ANDALA: "Thermal Conductivity of Graphite-Based Polymer Composites", pages: 181 - 188, XP055659566, DOI: 10.5772/intechopen.75676

## Description

### FIELD

Described herein are compositions and methods that impart thermal management properties to substrates. In particular the compositions and methods disclosed herein provide fibers, textiles, foams, and other substrates with coatings including both phase change materials and thermal conductivity additives.

### BACKGROUND

Thermal management properties have become desirable in textile-based and foam-based products used for clothing, bedding, and other materials that contact individuals. These materials can absorb and retain heat from the individual, which can create a sense of discomfort for the individual. Pillows and mattresses have been developed that dissipate heat and feel cool for a period of time. Those thermal management properties typically are provided by a phase change material ("PCM"), which has a high heat of fusion and is capable of storing and releasing energy at known, consistent temperatures. For apparel and bedding markets, paraffinic materials or fatty esters are commonly used as the PCM. These materials may be microencapsulated with a coating as a shell, for example a melamine-formaldehyde, acrylic, or polyurethane coating.

The amount of heat absorbed by a PCM depends on the mass of PCM present, and thus the thermal management properties imparted to a fiber, textile, or foam by a PCM are limited by the mass of PCM that can be added to the material. The mass of PCM that can be added to a substrate is limited by technical considerations, such as the physical properties of the treating composition and the application technique. It is also limited by practical considerations such as how the finished clothing, bedding, or other material will feel to an individual. Any microencapsulation increases the effective mass of the PCM without proportionate increase in the amount of heat that can be absorbed. Microencapsulation also impacts the thermal properties through a super cooling effect. Consequently, known PCM-treated fibers, textile, and foams can absorb enough heat to provide a cool-to-the-touch feel or to prevent discomfort for only a short time.

Another method of managing thermal properties is integration of highly thermally conductive particles into a medium with low thermal conductivity. The thermally conductive particles are generally infused into the medium. The particulate nature of the thermally conductive particles and the low conductivity of the medium into which they are incorporated limit the improvement in thermal conductivity of the composite material.

Chinese patent application CN 103451756 describes a method for preparing phase change fibers. A microencapsulated phase change material is mixed with fine ceramic powder, an inorganic salt and with a polymer solution. The resulting mixture is spun into fibers. Thus, in contrast to the present invention, the composition is not a coating for a fiber, textile, or foam, but fibers are directly spun from the composition.

Chinese patent application CN 107216858 discloses a method for preparing a thermally conductive phase change energy storage interface composition. The material is not applied as a coating for textiles or fibers like cotton or nylon, but combined with carbon fibers or glass fibers.

Japanese patent application JP 2003-183125 relates to a paper containing thermostable microcapsules, wherein a crystalline compound such as an aliphatic hydrocarbon is coated with, for example, urea or melamine-formaldehyde. Further, a composition for treating paper is disclosed, which may include cosmetic active agents and additives or fillers such as zinc oxide or alumina in addition to the microcapsules.

Chinese patent application CN 106957635 describes a microencapsulated phase change material, wherein nanographene sheets are disposed in the wall material and the core material. By the added nanoparticles, the thermal conductivity of the microencapsulated phase change material can be changed. Nanographene is integrated in the microcapsules.

International patent application WO 2013/135771 describes a mouldable composition containing graphite and microencapsulated PCM. The mouldable composition is not a dispersion in water and it cannot be used for coating fibers, textile, or foam, but is directly moulded into a desired shape.

US patent application US 2015/001440 relates to moldable mass containing graphite and a phase change material. An aqueous dispersion is not disclosed but rather a mass that may be molded into a desired shape. Its intended use is not the coating of fibers, textiles, or foams.

It is desirable to develop compositions and methods for treating substrates, including fibers, textile, and foams, to provide effective thermal management for many applications such as mattresses, upholstery, and apparel. Ideally, the treated substrates would provide heat absorption and/or a cool-to-the-touch feel for an extended period of time.

### SUMMARY

The present invention provides a thermal management formulation for treating a fiber, textile, or foam as defined in claims 1-5. Further, the invention provides a treated substrate as defined in claims 6-10. Additional aspects outside the scope of the appended claims are described herein for illustrative purposes only.

Described herein are compositions and methods for providing fibers, textiles, and/or foams that have desirable thermal management properties. The compositions are thermal management formulations that include a microencapsulated PCM ("mPCM") and a thermal conductivity additive ("TCA"). The compositions may be topically applied to fibers, textiles, and foams to impart the desirable thermal management properties to the substrates. Substrates including a coating with at least one mPCM and at least one TCA, which may be formed with the thermal management formulations, are also described herein.

The details of one or more embodiments are set forth in the description below. Other features, objects, and advantages will be apparent from the description, drawings, and claims.

### BRIEF DESCRIPTION OF THE DRAWINGS

FIG. 1 is an overlay of differential scanning calorimeter thermograms of a PCM (bulk) and the same PCM with microencapsulation.
FIG. 2 is an overlay of thermal graphs of three fabric samples treated with one of mPCM only, mPCM and aluminum oxide TCA, and mPCM and boron nitride TCA.
FIG. 3 is an overlay of the thermal graphs of four fabric samples treated with PCM and varying percentages of boron nitride TCA.

### DETAILED DESCRIPTION

Described herein are compositions and methods that can be used to treat fibers, textiles, foams and other substrates to impart to the substrates beneficial thermal management properties. For example, fibers, textiles, and foams treated as described herein demonstrate active heat absorption as well as heat dissipation over an extended period of time. In some cases, the active heat absorption and dissipation causes the substrates to feel cool to the touch for an extended period of time. This cool feeling can increase the comfort of clothing, bedding, or other products made from the substrates.

The thermal management formulations defined in claims 1-5 and treated substrates defined in claims 6-10 include at least one mPCM and at least one TCA. The thermal management formulations are useful to impart durable thermal management properties to substrates such as fibers, textiles, and foams. A thermal management formulation can be applied to a substrate by various methods to form a treated substrate, or coated substrate.

The combination of mPCM/TCA described herein significantly and unexpectedly improves the thermal properties of a treated substrate over the same substrate untreated or treated with only a mPCM. For example, when combined with TCAs, the mPCMs demonstrate improved ability to thermally cycle between liquid and solid phases compared to mPCMs in known fiber, textile, and foam products lacking the TCA. As one example, as described in more detail below, the TCA actually raises the recrystallization temperature of the PCM, which allows the PCM to reactivate (re-solidify) and provide additional cooling effects more quickly than it would if the TCA were absent or present at a lower level. Also, the TCA increases the thermal conductivity of the treated substrate without damaging the mPCM or having a negative effect on mPCM heat absorbing properties.

As used herein, the term "fiber" means, unless otherwise stated, any natural or synthetic polymer suitable for producing textiles. Examples of fibers include without limitation ramie; linen; cellulosic strands such as cotton or hemp; synthetic filaments such as polyester, nylon, rayon and polyolefin; animal-derived strands such as wool and silk; and other such filamentous strands. A fiber may be continuous, e.g., of indefinite length. As used herein, the term "textile" means, unless otherwise stated, any combination of fibers, including but not limited to woven, non-woven, or knitted. Non-limiting examples of textiles include threads, yarns, fabrics, and cloths. As used herein, "foam" means a framework of solid material with pockets of gas inside the solid material. Typically the solid material is a polymer, such as but not limited to a polyurethane, a polyacrylic, and/or a latex polymer, but in some examples the solid need not be a polymer.

Phase change materials are capable of storing and releasing large amounts of energy as they change from one phase of matter to another. The PCMs described herein are encapsulated to form microencapsulated PCMs ("mPCMs"). Heat is absorbed when the material changes from solid to liquid, and heat is released when the material changes from liquid to solid. In some examples, PCMs useful in the formulations and treated substrates described herein have a melting point of 10 to 90 °C (e.g., 27 °C to 37 °C, 27 °C to 32 °C, or 27 °C to 29 °C). In other examples, useful PCMs have a melting point in a desired operating temperature range, which may vary depending on the end use of the treated substrate. The PCMs described herein have a heat of fusion of at least 100 J/g, as measured by ASTM D3418-12el. The PCMs optionally have a heat of fusion of 170-200 J/g, as measured by ASTM D3418-12el. When applied to textiles or to a foam as a surface treatment with a TCA, certain mPCMs provide improved thermal management properties to the final product.

For fiber, textile, and foam applications where the treated substrate will contact an individual or will be incorporated into a product that will contact an individual, applying mPCM can increase comfort to the individual by providing a cool-to-the-touch effect. mPCMs capable of being applied to a fiber, textile, or foam and undergoing a phase change due to heat from a wearer or user that are used in the thermal management formulations described herein are those where the PCM includes a salt hydrate; fatty acid or derivative thereof (e.g., fatty ester, fatty alcohol, and/or fatty amine); or an alkane (e.g., various oleochemicals and/or paraffins). Optionally, the PCM is an alkane having 12 to 20 carbon atoms, such as dodecane, tetradecane, hexadecane, octadecane, or eicosane. The PCM can be derived from a plant, animal, or petroleum source. The PCM can be derived from a biorenewable source.

In some examples, the microencapsulation coating on the mPCM may be an acrylic, polyurea, polyurethane, melamine-formaldehyde, or other coating. Coatings on PCMs, such as melamine-formaldehyde coatings, prevent the PCM from dispersing when it melts and thereby contributes to the durability of the mPCM treatment on the substrate. Moreover, combining the mPCM with a binder such as polyurethane and/or acrylic (polyacrylate) can significantly improve the wash durability of a mPCM-treated fiber, textile, or foam.

In some examples, the mPCM can include a microencapsulated oleochemical. In some examples, the mPCM can include a microencapsulated octadecane.

TCAs as described herein are inorganic materials with high thermal conductivities, for example thermal conductivities in excess of 10 W/m·K. The TCAs applied according to the invention comprise an inorganic material selected from graphite, graphene, aluminum oxide including calcined aluminum oxide, and zinc oxide with thermal conductivities greater than 10 W/m·K, for example at least 20 W/m K, at least 30 W/m·K, at least 40 W/m·K, at least 50 W/m K, at least 60 W/m·K, at least 70 W/m K, at least 80 W/m K, at least 90 W/m K, at least 100 W/m·K. In some embodiments, the TCA has high purity, for example greater than 95 %, greater than 99 %, or greater than 99.5 %. In some examples, the TCAis zinc oxide or aluminum oxide having a purity greater than 95 %, greater than 99 %, or greater than 99.5 %. Optionally, the TCA is calcined aluminum oxide having a purity greater than 95 %, greater than 99 %, or greater than 99.5 %.

The TCAs described herein are particulate materials with a maximum particle size of less than 1 mm (e.g., 0.001 to 1 mm, 0.001 to 0.1 mm, 0.001 to 0.01 mm). In some examples, the TCA is a particulate material having a size of about 10 micron.

To achieve a desired percent add-on and wash durability of the treated substrate, the TCA may be applied with a binder, for example a polyurethane and/or acrylic binder. In some embodiments, a thermal management formulation described herein includes from about 1 % to about 20 %, for example from about 3 % to about 15 % binder.

When applied to a fiber, textile, or foam as described herein, the TCAs described herein mitigate the low thermal conductivity of an untreated substrate or a substrate treated with only mPCM, improving the rate of heat transfer through the product. Moreover, integration of the TCA into the treated substrate enhances the effect of a mPCM applied to the same substrate by mitigating the effect of the encapsulating material to increase the temperature and the rate at which the melted PCM will re-freeze (thus, reactivating the PCM).

The herein described mPCM and TCA are formulated as a dispersion in water to form a thermal management formulation for treating substrates, e.g., fibers, textiles, and/or foams. When the substrate is treated with the thermal management formulation, the formulation forms a coating that imparts thermal management properties to the substrates.

According to the invention, thermal management formulations include mPCM, TCA, and water in a weight ratio of mPCM:TCA in the range from about 1.5:1 to about 14:1. For example, the mPCM and TCA may be present in a ratio of mPCM:TCA, or from about 2:1 to about 12:1, or from about 7:1 to about 10:1. In some embodiments, the thermal management formulation includes mPCM in a weight percentage of at least about 10 %, or at least about 20 %, or at least about 30 %. For example, the formulation may include mPCM in a weight percentage of from about 10 % w/w to about 60 % w/w, such as from about 20 % w/w to about 60 % w/w or from about 30 % w/w to about 55 % w/w, 10 % to about 41 %, from about 19 % to about 25 %, or from about 38 % to about 41 %. In some embodiments, a thermal management formulation includes TCA in a weight percentage of at least about 1 %, or at least about 3 %, or at least about 5 %. For example, the formulation may include TCA in a weight percentage of from about 1 % to about 25 %, for example from about 3 % to about 12 %. In some embodiments, the balance of the formulation is water. In alternative embodiments, the formulation may further include other chemicals, referred to herein as textile auxiliaries, to ensure optimal application and performance.

In addition to the mPCM, TCA and water, in some embodiments the thermal management formulations described herein include textile auxiliaries such as softeners, binders, defoaming agents, thickeners, dispersants, or other additives used to improve the applicability of the thermal management formulation to the substrate or to improve the physical/tactile properties of the final treated substrate. At least some of these textile auxiliaries are commercially available as solutions, dispersions, or emulsions of an active ingredient (e.g., a polymeric softener) in a solvent (e.g. water or an organic solvent). As used herein, the concentration of the textile auxiliaries in the disclosed thermal management formulations are provided as the percentage of the active ingredient, referred to herein as the auxiliary "solids," in the thermal management formulations, irrespective of the concentration of the active ingredient in any commercial product, and irrespective of whether the auxiliary "solids" are dissolved, dispersed, or emulsified in the disclosed thermal management formulations.

In any thermal management formulation described herein, a softener or plasticizer can be included if desired to modify the drape and feel of the substrate. Examples of softeners or plasticizers include silicone and polyglycol ethers, but other softeners or plasticizers can be used. Textile softeners can be included in the thermal management formulations at concentrations of 0 - 5.0 % (w/w) (e.g., 0.05 - 5.0 %) softener solids relative to the total formulation.

In any thermal management formulation described herein, a binder can be included to hold the coating to the substrate or to increase the wash-durability of a treated substrate. In some examples, the binder can be styrene, acrylic, and/or urethane based, but other binders can be used. Optionally, a combination of components can be used for the binder. For example, a polyurethane dispersion with an acrylic emulsion can be utilized to achieve the required wash durability and handle specifications. In some examples, the addition of binders achieves a treatment durable to repeated launderings, in some cases to twenty or more launderings. Binders can be included in the thermal management formulations at concentrations of 0 - 15 % (w/w) (e.g., 4.5 - 11 %, 4.5 - 6 %, 8 - 15 %) binder solids relative to the total formulation.

In any thermal management formulation described herein, a biocide can be included to prevent the growth of microorganisms and extend the useful life of the formulation. Any biocide suitable for use with fibers, textile, and foams can be used. A biocide can be included in the thermal management formulations at concentrations of 0 - 1 % (w/w) (e.g., 0 - 0.5 %) biocide solids relative to the total formulation.

In any thermal management formulation described herein, a defoaming agent can be included to prevent or reduce the formation of foam during the manufacturing of the formulation or during treating the substrate. In some examples, the defoaming agent can be a silicone or a polyglycol ether, but other defoaming agents can be used. Defoaming agents can be included in the thermal management formulations at concentrations of 0 - 0.5 % (w/w) (e.g., 0 - 0.15 %) defoaming agent solids relative to the total formulation.

In any thermal management formulation described herein, a thickener can be included to increase the viscosity of the formulation. Thickeners can be included in the thermal management formulations at concentrations of 0 - 2 % (w/w) (e.g., 0 - 0.5 %) thickener solids relative to the total formulation.

In any thermal management formulation described herein, a dispersant can be included to facilitate dispersion of particles or to prevent settling of dispersed particles. Dispersants can be included in the thermal management formulations at concentrations of 0 - 10 % (w/w) (e.g., 0 - 5 %) dispersant solids relative to the total formulation.

Other agents, such as anti-yellowing agents, flame retardants, and/or water repellents, also can be included in any thermal management formulation described herein. These agents can impart desired properties to the final treated textile in addition to the properties imparted by the mPCM and TCA. Alternatively, these agents may be separately applied to a substrate either before or after the thermal management formulation is applied.

The thermal management formulations described herein are formulated as a dispersion in water. In addition to water, the formulations optionally can include one or more organic solvents. For example, in some examples, the formulations may include N, N-dimethylformamide, N-methyl pyrollidone, acetamide, acetic acid, acetone, methyl ethyl ketone, or alcohols.

In some examples, a thermal management formulation includes mPCM, TCA, and reminder water. For example, the thermal management formulation can include 19 to 41 wt. % mPCM (e.g., 19 to 25 wt. %, 19 to 38 wt. %, 25 to 41 wt. %, or 38 to 41 wt. %); 3 to 12 wt. % TCA; and remainder water.

In an embodiment, the thermal management formulation includes mPCM and TCA in a weight ratio of mPCM:TCA of from about 1.5:1 to about 14:1, or from about 2:1 to about 12:1, or from about 7:1 to about 10:1.

In an embodiment, the thermal management formulation includes:
(1) mPCM in a weight percentage of 10 % w/w to about 60 % w/w, or from about 20 % w/w to about 60 % w/w, or from about 30 % w/w to about 55 % w/w;
(2) TCA in a weight percentage of from about 1 % to about 25 %, or from about 3 % to about 12 %; and
(3) water.

In an embodiment, the thermal management formulation includes:
(1) mPCM and TCA in a weight ratio of mPCM:TCA of from about 1.5:1 to about 14:1, or from about 2:1 to about 12:1, or from about 7:1 to about 10:1;
(2) the mPCM in a weight percentage of at least about 10 %, or at least about 20 %, or at least about 30 %;
(3) the TCA in a weight percentage of at least about 1 %, or at least about 3 %, or at least about 5 %;
(4) a binder in a weight percentage of binder solids relative to the total formulation of from 0 % to about 15 %, or from about 4.5 % to about 11 %, or from about 4.5 % to about 6 %, or from about 8 % to about 15 %;
(5) one or more of a softener, defoaming agent, thickener, dispersant, or other textile auxiliary in a weight percentage of total auxiliary solids relative to the total formulation of from 0 % to about 15 %, or from about 1 % to about 12 %, or from about 5 % to about 12 %, or from about 5 % to about 10 %; and
(6) balance water.

In an embodiment, the thermal management formulation includes:
(1) mPCM in a weight percentage of 10 % w/w to about 60 % w/w, or from about 20 % w/w to about 60 % w/w, or from about 30 % w/w to about 55 % w/w;
(2) TCA in a weight percentage of from about 1 % to about 25 %, or from about 3 % to about 12 %;
(3) a binder in a weight percentage of binder solids relative to the total formulation of from 0 % to about 15 %, or from about 4.5 % to about 11 %, or from about 4.5 % to about 6 %, or from about 8 % to about 15 %;
(4) one or more of a softener, defoaming agent, thickener, dispersant, or other textile auxiliary in a weight percentage of total auxiliary solids relative to the total formulation of from 0 % to about 15 %, or from about 1 % to about 12 %, or from about 5 % to about 12 %, or from about 5 % to about 10 %; and
(5) balance water.

In an embodiment, the thermal management formulation includes:
(1) mPCM and TCA in a weight ratio of mPCM:TCA of from about 1.5:1 to about 14:1, or from about 2:1 to about 12:1, or from about 7:1 to about 10:1;
(4) a binder in a weight percentage of binder solids relative to the total formulation of from 0 % to about 15 %, or from about 4.5 % to about 15 %, or from about 4.5 % to about 11 %, or from about 4.5 % to about 6 %;
(5) one or more of a softener, defoaming agent, thickener, dispersant, or other textile auxiliary in a weight percentage of total auxiliary solids relative to the total formulation of from 0 % to about 15 %, or from about 1 % to about 12 %, or from about 5 % to about 12 %, or from about 5 % to about 10 %, and
(6) water.

Also provided herein are treated substrates as defined in claims 6-9 including a substrate and a coating on the substrate, where the coating includes at least one mPCM and at least one TCA. In some examples, the substrate is a fiber. As examples of fibers, the substrate can include a natural fiber, such as cotton, wool, ramie, linen, bamboo, jute, hemp, or viscose; a synthetic fiber, such as polyester, nylon, rayon, polyolefin; or a blend of natural and synthetic fibers. In some examples, the substrate is a textile. As examples of textiles, the substrate can be a woven or nonwoven and/or can include one or more types of fibers. In some examples, the substrate is a foam. As examples of foams, the substrate can include a solid, polymeric foam, such as a polyurethane, a polyacrylic, or a latex foam. The coating covers at least a portion of a surface of the substrate. The coating is adhered to the substrate, attached to the substrate by chemical bond, or otherwise associated with the substrate. The mPCM and TCA in the coating impart beneficial thermal management properties to the coated substrate. As one example, the coatings described herein enhance the thermal conductivity of the treated substrate.

Critically and unexpectedly, the TCA in the coating mitigates the super-cooling effect of the microencapsulation on the PCM. For standard application of mPCM to fibers, textiles, and foams, the thermal properties of the mPCM are impacted by the type of PCM and the shell used for microencapsulation. For example, the shell of the PCM lowers the temperature that must be reached for the PCM to transition from liquid to solid phase. Thus, that transition will occur only when the mPCM is cooled to a temperature lower than that required for pure, non-encapsulated PCM to solidify. This super-cooling effect can prevent or inhibit reactivation of the PCM, that is, prevent transition of the PCM from its liquid state back to its solid state, after the mPCM-based product is used to absorb heat. Even in the best case, the super-cooling effect broadens the temperature over which the PCM is a liquid and would need to be reactivated.

As a practical example of how the super-cooling effect might have a negative impact on a treated substrate, a PCM that melts at 28 °C and recrystallizes at 23-25 °C might seem ideal for treating bedding so a user experiences a cool-to-the-touch effect while sleeping and the PCM recrystallizes each day so the effect can be experienced on subsequent nights. If, however, microencapsulation of the PCM depresses the recrystallization temperature to below 20 °C, the bedding may never get cool enough for the PCM to recrystallize. In that case, after the mPCM has absorbed sufficient heat for the PCM to fully melt, the PCM will not recrystallize, and the user will no longer experience the cooling effect provided by the solid PCM.

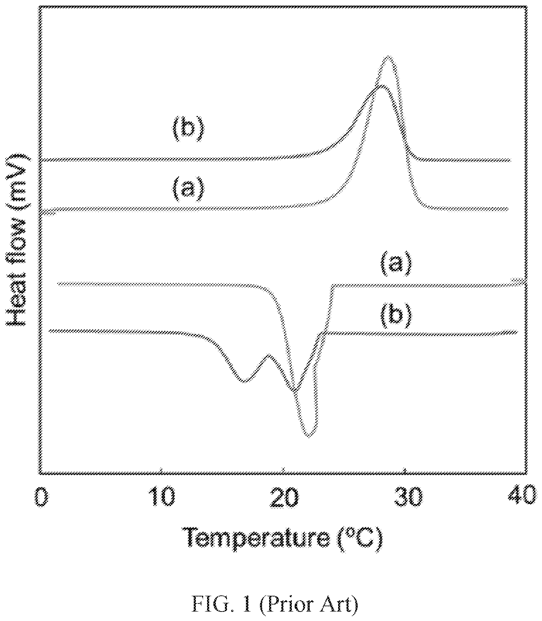

The super-cooling effect is illustrated in FIG. 1, which is an overlay of differential scanning calorimeter thermograms of (a) bulk octadecane (a PCM) and (b) poly(methyl methacrylatedvinyl benzene)/octadecane microcapsules (a microencapsulated PCM) (Amorn Chaiyasat, et al. Innovative bifunctional microcapsule for heat storage and antibacterial properties. International J. of GEOMATE, May, 2018, Vol. 14, Issue 45, pp. 91-98, Fig. 6). As shown in FIG. 1, the crystallization onset temperature and crystallization peak temperatures for the microencapsulated PCM (b) are is lower than the crystallization onset temperature and the crystallization peak temperature for the bulk PCM (a). Thus, the microencapsulation causes a depression in crystallization temperature.

The coating compositions described herein integrate the mPCM and TCA in the same coating. The TCA in the coating composition mitigates the super-cooling effect of the microencapsulation by increasing the crystallization onset temperature for the mPCM, counteracting the depression in crystallization temperature caused by the microencapsulation. In particular, the mPCM of the treated substrates described herein demonstrate an increase in crystallization onset temperature and an increase in crystallization peak temperature as compared to the same composition without a TCA. This effect is more pronounced the higher the thermal conductivity of the TCA. The effect is also more pronounced the higher the concentration of TCA.

The integration of mPCM and TCA produces a pronounced impact on the thermal properties of the mPCM and reduces the super cooling effects due to microencapsulation. By reducing the super cooling effects, the PCM is able to recrystallize at a higher temperature, allowing the PCM to reactivate and provide additional cooling effects more quickly than it would in a coating with no TCA or with lower levels of TCA.

In addition to mitigating the super-cooling effect of the PCM microencapsulation, the TCA also increases the thermal conductivity of a mPCM-treated fabric without damaging the mPCM or having a negative effect on mPCM heat absorbing properties. The TCA has significantly higher thermal conductivity (by two orders of magnitude or more) than the standard organic-based materials used in the application of mPCM to textiles such as acrylic or urethane-based polymers. Enhancement of thermal conductivity can contribute to the general sense of coolness due to improved heat transport away from a person touching a treated substrate.

The combination of mPCM/TCA in the coating thus improves the thermal properties of the coated substrate as compared to an uncoated substrate or to a substrate coated only with a mPCM. As a consequence of the improvements provided by the thermal management formulations described herein, the mPCMs in the coatings of the fibers, textiles, and foams treated with those formulations demonstrate improved ability to thermally cycle between liquid and solid phases and more rapidly regenerate compared to mPCMs in known fiber, textile, and foam products lacking a TCA.

According to the invention, a treated substrate includes a fiber, textile, or foam substrate having a coating on at least one external surface where the coating includes at least one mPCM and at least one TCA. In the case of a foam substrate, the coating is concentrated on an external surface of the foam so the mPCM and TCA are also concentrated on the external surface of the foam and are not distributed throughout the foam. In some examples, the mPCM and TCA do not penetrate into the foam beyond the surface of the foam to any appreciable extent. The mPCM/TCA coating can be applied to the foam substrate as a surface treatment. In some examples the foam is a polymeric foam that is fully cured before the coating is applied to the surface of the foam. For example, the foam may be a fully cured polyurethane foam.

In some examples, the coating on the substrate can include other textile treating chemicals in addition to mPCM and TCA. For example, the coating may include a softener or plasticizer, a binder, a thickener, a biocide, an anti-yellow agent, a flame retardant, a water repellant, or another known textile treating agent.

The treated substrates described herein can be formed by applying the thermal management compositions described herein to substrates, including fibers, textiles, and foams. In some examples, the substrates include natural fibers, such as cotton, wool, ramie, linen, bamboo, jute, hemp, or viscose; synthetic fibers, such as polyester, nylon, rayon, polyolefins; or blends of natural and synthetic fibers. In some examples, the substrates include textiles, such as woven or non-woven textiles. In some examples, the substrates include solid foams, such as a solid polymeric foam (for example a cured polyurethane, polyacrylate, or latex polymer). The thermal management formulations described herein can be applied to any substrate, optionally using one of the methods described herein. Alternatively, the treated substrates can be made by any method of associating a mPCM and a TCA with the substrate.

A method of imparting thermal management properties to a substrate may include (a) applying a thermal management formulation described herein to the substrate and (b) drying the formulation on the substrate. The drying step can include curing the formulation. The formulation may be applied by any known method, including but not limited to immersing the substrate in a bath of the formulation, spraying the formulation on the substrate, pad/nip application, back-coating, kiss coating, knife coating, screen printing, application of a liquid foam, or other methods known to those practiced in the art.

A thermal management formulation as described herein may be provided as a concentrated aqueous solution or dispersion that is diluted with water prior to use as a treating formulation for treating a substrate. Additionally, or alternatively, the concentrated aqueous solution may be further diluted with an organic solvent such as methanol, ethanol, 2-propanol, or acetone prior to use for treating a substrate.

After the thermal management formulation is applied to the substrate, the substrate can be dried. Drying can be carried out according to a variety of methods if sufficient energy is provided to evaporate water and any other solvent from the formulation. Drying the substrate optionally includes heating the substrate. For example, a wet treated substrate can be dried in an oven heated to 100 °C to 190 °C, or optionally to 130 °C to 160 °C. In some cases, drying the substrate can be accelerated to less than 10 minutes by using a drying oven. The substrate may also be left at ambient conditions to dry over time.

One example of a method of treating a fabric using a thermal management formulation described herein includes optionally diluting the thermal management formulation with water and thoroughly mixing (for example, for about 30 minutes). The diluted thermal management formulation is then transferred (for example, with pumping) from the mix tank to a pad bath, which uses a recirculator to keep the solids suspended in the bath constant. The fabric to be coated is passed first through the pad bath and then through nip rollers to squeeze excess treating formulation out of the fabric. The nip pressure can vary, depending on the desired wet pick-up. Typically the nip pressure is from about 2.5 to about 4.0 Newtons. After passing through the nip rollers, the fabric is dried by being conveyed through a multi-zone oven to remove water and cure the chemistry into the fabric. The drying temperature profile can vary depending on the specific formulation chemistry and type of fabric, but typical drying temperature profiles include a step at about 100 °C to 110 °C to drive the water out, and then a step at about 110 °C to about 150 °C to cure the binder. The treated, dried, and cured fabric can be wound onto rolls. Dry add-on values can be calculated from punch-outs.

One example of a method of treating a foam using a thermal management formulation described herein includes optionally diluting the thermal management formulation with water and thoroughly mixing (for example, for about 30 minutes). Typically, as compared to a textile application, for a foam application the thermal management formulation would include less water, i.e., would include a higher w/w percentage of solids. The thermal management formulation is dispensed onto moving rollers, which transfer the mPCM and TCA to foam substrates moving on a conveyer. The amount of wet chemistry applied can be controlled by using gap and speed setting controls. After application of the wet formulation to the foam, the foam is dried and cured, for example by being conveyed through an IR oven, which removes water and cures the formulation. The drying temperature profile can vary depending on the specific formulation chemistry and type of foam, but typical drying temperature profiles include a step at about 100 °C to 110 °C to drive the water out, and then a step at about 110 to about 150 °C to cure the binder. Dry add-on values can be calculated from punch-outs.

An alternative method for treating textile or foam is spray application.

The thermal management formulations described herein can be used in combination with one or more other treating compositions to treat a substrate. The one or more other treating compositions may be applied to the substrate in an application step separate from application of the thermal management formulation. In some embodiments, application of one or more other treating compositions may precede the application of the thermal management formulation described herein. In other embodiments, application of one or more other treating compositions may follow the application of the thermal management formulation described herein.

### Illustrative embodiments

Below, illustrative aspects of the invention are summarized.

A first embodiment of the invention is a thermal management formulation for treating a fiber, textile, or foam as defined in claim 1, the formulation comprising a microencapsulated phase change material ("mPCM"), a thermal conductivity additive ("TCA"), and water.

The mPCM and the TCA are present in the formulation in a weight ratio of PCM:TCA from about 1.5:1 to about 14:1, such as from about 2:1 to about 12:1 or from about 7:1 to about 10:1.

in an illustrative embodiment, the mPCM is present in the formulation in an amount of at least about 10 % w/w, such as at least about 20 % w/w or at least about 30 % w/w.

The mPCM can be present in the formulation in an amount of from about 10 % w/w to about 60 % w/w, such as from about 20 % w/w to about 60 % w/w or from about 30 % w/w to about 55 % w/w.

In an illustrative embodiment, the TCA is present in an amount of at least 1 %, such as at least 3 % or at least 5 %.

The TCA can be present in an amount of from about 3 % w/w to about 25 % w/w, such as from about 5 % w/w to about 12 % w/w.

In an illustrative embodiment 7, the mPCM comprises a PCM having a melting point from about 15 °C to about 40 °C and a heat of fusion of from 170 to 260 J/g as measured by ASTM D3418-12e1.

According to the invention, the mPCM comprises a PCM comprising a salt hydrate; a fatty acid or derivative thereof; or an alkane such as an oleochemical or a paraffin.

In an illustrative embodiment, the mPCM comprises a PCM comprising octadecane.

According to the invention, the TCA comprises an inorganic material selected from graphite, graphene, zinc oxide, and aluminum oxide, including calcined aluminum oxide, with a thermal conductivity greater than 10 W/m K.

In an illustrative embodiment, the TCA is a particulate material comprising a maximum particle size of less than 1 mm.

The particulate material may comprise an average particle size from 0.001 mm to 0.010 mm.

In an illustrative embodiment, the thermal management formulation of the invention further comprises a binder, optionally wherein the binder comprises styrene, acrylic, styrene-acrylic, or urethane.

In a further illustrative embodiment, the thermal management formulation of the invention further comprises a softener, defoaming agent, thickener, or dispersant.

In a still further illustrative embodiment, the thermal management formulation further comprises a flame retardant, optionally wherein the flame retardant is an organophosphate.

Thermal management properties can be imparted to a substrate by a method comprising: contacting a substrate with a thermal management formulation of any preceding illustrative embodiment; and drying the substrate, wherein the substrate is a fiber, textile, or foam.

Contacting the substrate may comprise immersion, spraying, pad/nip application, back-coating, kiss coating, knife coating, or screen printing.

Drying the substrate may comprise heating the substrate.

A concentrated thermal management formulation can be diluted to form the thermal management formulation before contacting the substrate with the thermal management formulation.

A second embodiment of the invention is a treated substrate comprising a substrate, and a coating on at least a portion of a surface of the substrate, as defined in claim 6.

The coating is obtained by treating the substrate with the thermal management formulation of the invention as defined with reference to the first embodiment.

The substrate comprises aa textile, a fiber or a foam.

In an illustrative embodiment, the substrate comprises a fiber, wherein the fiber comprises a natural fiber, a synthetic fiber, or a blend of natural and synthetic fibers; optionally wherein the natural fiber comprises a cotton, wool, ramie, linen, bamboo, jute, hemp, or viscose; optionally wherein the synthetic fiber comprises polyester, nylon, rayon, polyolefin.

In a further illustrative embodiment, the substrate comprises a textile, such as a woven or nonwoven textile.

The textile may include more than one type of fiber.

In a further illustrative embodiment, the substrate comprises a solid polymeric foam.

The foam may comprise a polyurethane, a polyacrylic, or a latex foam.

In an illustrative embodiment, the coating is adhered to the surface of the substrate, attached to the surface of the substrate by chemical bond, or otherwise associated with the surface of the substrate.

In an illustrative embodiment of the treated substrate of the invention, the TCA increases the temperature at which the PCM begins to recrystallize.

### Examples

The examples below are intended to further illustrate certain aspects of the methods and compounds described herein, and are not intended to limit the scope of the claims. Differential scanning calorimetry was carried out on a TA Instruments DSC 250, using a scan rate of 10 °C/min, and using 5 mg samples.

All percentages in these example are by weight based on the total formulation, unless specifically stated otherwise.

### Example 1: Preparation of mPCM-TCA Formulation for textile or foam application

The following components were combined with 40.25 L water sequentially with mixing: 30 kg microencapsulated paraffin mPCM (20 micron average particle size), 14 kg acrylic binder, 1 kg of thickener, 0.5 kg dispersants, 0.25 kg defoaming agent, 8 kg flame retardant, and 6 kg alumina powder TCA (10 micron average particle size, 99.5 % purity). The mPCM and TCA were present in the formulation in a weight ratio of about 5:1. The mPCM was present at about 30 %, and the TCA was present at about 6 %. The pH was adjusted to pH=9 by adding concentrated aqueous ammonia solution and the final formulation was mixed for about an hour.

### Example 2: Preparation of mPCM-TCA Formulation for textile or foam application

The following components were combined with 31.5 L water sequentially with mixing: 20.5 kg microencapsulated paraffin mPCM (20 micron average particle size), 23 kg polyurethane binder, 1.5 kg of thickener, 1 kg dispersants, 0.25 kg defoaming agent, 6 kg flame retardant, and 9 kg alumina powder TCA (10 micron average particle size, 99.5 % purity). The mPCM and TCA were present in the formulation in a weight ratio of about 2.3:1. The mPCM was present at about 21.9 %, and the TCA was present at about 9.7 %. The pH was adjusted to pH=9 by adding concentrated aqueous ammonia solution and the final formulation was mixed for about an hour.

### Example 3: Preparation of mPCM-TCA Formulation for textile application

A mPCM-TCA formulation was prepared essentially as described in Example 2. The mPCM was a microencapsulated paraffin (5 micron particle size), and the TCA was boron nitride powder (10 micron particle size, 99 % purity). The mPCM and TCA were included at about 42 % w/w and about 6 % w/w, respectively, for a mPCM:TCA weight ratio of 7:1. The binder was a styrene-acrylic water-based adhesive and was included at about 12 % w/w. To demonstrate compatibility with other textile treating agents, ammonium polyphosphate was included at about 7.9 % w/w. A biocide was also added at about 0.2 % w/w to improve the shelf-life of the formulation. Dispersing agents and thickeners were added in amounts similar to that described in Example 2. Ammonium hydroxide (NH₄OH) (48 %) was added to the composition to adjust the pH to 9.0. After adjusting the pH, the composition was mixed for about 1 hour.

### Example 4: Treatment of Fabric with a mPCM-TCA Thermal Management Formulation

The thermal management formulation described in Example 1 was diluted with water in a ratio of 40 % formulation to 60 % water and thoroughly mixed in a mix tank for 30 minutes. The diluted thermal management formulation was then pumped from the mix tank to a pad bath on a production frame. The pad bath used a recirculator to keep the solids in the bath constant. The fabric to be coated was passed first through the pad bath and then through nip rollers to squeeze excess treating formulation out of the fabric. The nip pressure was from about 3.0 to about 3.7 Newtons. After passing through the nip rollers, the fabric was dried by being conveyed through a multi-zone oven to remove water and cure the chemistry into the fabric. The drying temperature profile included a step at about 100 °C to 110 °C to drive the water out, and then a step at about 110 °C to about 130 °C to cure the binder. The treated, dried, and cured fabric was wound onto rolls. Dry add-on values were be calculated from punch-outs as 15 % w/w.

### Example 5: Treatment of foam with a mPCM-TCA Thermal Management Formulation

The thermal management formulation described in Example 2 was used without dilution and was dispensed onto moving rollers, which transfer the mPCM and TCA to pieces of foam moving on a conveyer below the rollers. The amount of wet chemistry was optimized by using gap and speed setting controls. After application of the wet formulation to the foam, the foam was conveyed through an IR oven, which removed water and cured the formulation. The drying temperature profile included a step at about 100 °C to 110 °C to drive the water out, and then a step at about 110 °C to about 130 °C to cure the binder.

### Example 6: Thermal analysis of treated fabric samples including aluminum oxide as the TCA

Three samples of polyester-based mattress ticking fabric, each treated with a thermal management formulation described herein including a mPCM and a TCA were analyzed using differential scanning calorimetry. Each sample was treated with a formulation including about 32 % w/w of microencapsulated octadecane (20 micron average particle size) as the PCM and from about 6 % w/w to about 24 % w/w aluminum oxide (10 micron particle size, 99.5 % purity) as the TCA, as shown in Table 1. Each thermal management formulation also included 20 % acrylic binder and the balance water. Data from the thermal analysis of these samples is summarized in Table 1. Crystallization peak onset temperature increased with increasing percentage of aluminum oxide.

**TABLE 1**

| **Sample** | **mPCM in Formulation (%)** | **TCA in Formulation (%)** | **Add On (%)** | **Onset temp (°C)** |
|---|---|---|---|---|
| 1 | 32 | 6 | 34.3 | 22.76 |
| 2 | 32 | 9 | 34.1 | 23.10 |
| 3 | 32 | 24 | 36.5 | 23.83 |

### Example 7: Thermal analysis of treated fabric samples including boron nitride as the TCA

Four samples of polyester-based mattress ticking fabric, each treated with a thermal management formulation described herein including a mPCM and a TCA were analyzed using differential scanning calorimetry, as explained above in example 6. Each sample was treated with a formulation including about 32 % w/w of microencapsulated octadecane (20 micron average particle size) as the PCM and from about 6 % w/w to about 24 % w/w boron nitride (20 micron particle size, 99 % purity) as the TCA, as shown in Table 2. Each thermal management formulation also included 20 % acrylic binder and the balance water. Data from the thermal analysis of these samples is summarized in Table 2.

**TABLE 2**

| **Sample** | **mPCM in Formulation (%)** | **TCA in Formulation (%)** | **Add On (%)** | **Peak Onset** |
|---|---|---|---|---|
| 4 | 32 | 6 | 44.1 | 23.25 |
| 5 | 32 | 12 | 45.2 | 23.35 |
| 6 | 32 | 18 | 42.1 | 23.45 |
| 7 | 32 | 24 | 51.9 | 23.75 |

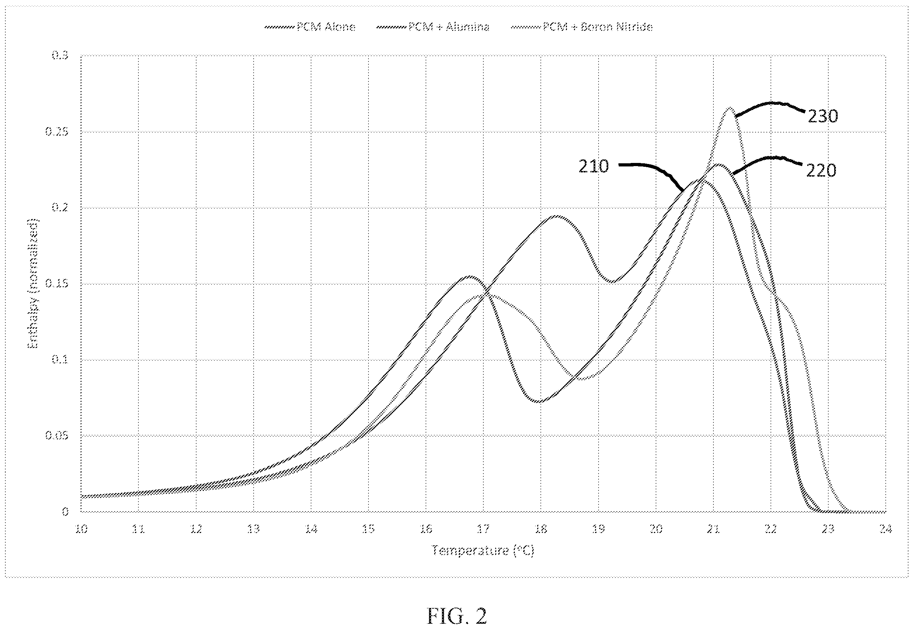

FIG. 2 compares thermal graphs of a sample treated with PCM only, but otherwise identical to Samples 1-7; Sample 1 (6 % aluminum oxide TCA), and Sample 4 (6 % boron nitride TCA). The boron nitride TCA has greater thermal conductivity than the alumina TCA. The mPCM-only thermogram 210 has its higher-temperature crystallization peak centered just below 21°C. That peak shifts to higher temperatures with the inclusion of TCAs. The Sample 1 (mPCM/alumina) thermogram 220 has its higher-temperature crystallization peak centered just above 21°C, and the higher-temperature crystallization peak for the Sample 4 (mPCM/boron nitride) thermogram 230 is even higher. Thus, the more thermally conductive TCA (boron nitride) has a more pronounced effect on the mPCM thermal properties.

Thus, both the aluminum oxide TCA and the boron nitride TCA increased the crystallization onset temperature of the microencapsulated PCM. The boron nitride TCA yielded bimodal peaks with a peak split higher than that of the aluminum oxide TCA, and the area of the peak above the split was higher for boron nitride (about 62 %) than for aluminum oxide (about 57.8 %).

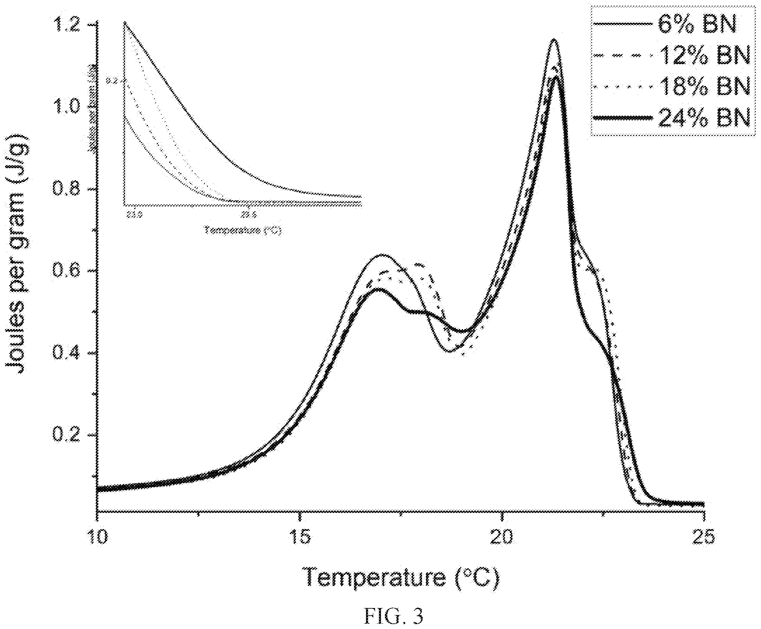

FIG. 3 further demonstrates the impact of TCAs on the thermal properties of mPCM. FIG. 3 is an overlay of the thermal graphs of each of Samples 4-7. The crystallization onset temperature of the microencapsulated PCM increased with increasing percentage of boron nitride TCA.

## Claims

1. A thermal management formulation for treating a fiber, textile, or foam, the formulation comprising a microencapsulated phase change material ("mPCM"), a thermal conductivity additive ("TCA"), and water, wherein the TCA comprises an inorganic material selected from graphite, graphene, zinc oxide, and aluminum oxide, including calcined aluminum oxide, with a thermal conductivity greater than 10 W/m·K, and wherein the mPCM comprises a PCM comprising a salt hydrate; a fatty acid or derivative thereof; or an alkane such as an oleochemical or a paraffin, wherein the mPCM and the TCA are present in the formulation in a weight ratio of PCM:TCA from about 1.5:1 to about 14:1, such as from about 2:1 to about 12:1 or from about 7:1 to about 10:1, and wherein the formulation is a dispersion of the mPCM and the TCA in the water.

2. The thermal management formulation of claim 1, wherein the mPCM is present in the formulation in an amount of at least about 10 % w/w, such as at least about 20 % w/w or at least about 30 % w/w, and/or wherein the TCA is present in an amount of at least about 1 %, such as at least about 3 % or at least about 5 %.

3. The thermal management formulation of any preceding claim, wherein the mPCM comprises a PCM comprising octadecane.

4. The thermal management formulation of any preceding claim, wherein the TCA is a particulate material comprising a maximum particle size of less than 1 mm, preferably an average particle size from 0.001 mm to 0.010 mm.

5. The thermal management formulation of any preceding claim, further comprising a binder, optionally wherein the binder comprises styrene, acrylic, styrene-acrylic, or urethane, and/or further comprising a flame retardant, optionally wherein the flame retardant is an organophosphate.

6. A treated substrate comprising a substrate, and a coating on at least a portion of a surface of the substrate, wherein the coating is obtained by treating the substrate with the thermal management formulation of any one of claims 1-5, and wherein the substrate comprises a textile, a fiber, or a foam.

7. The treated substrate of claim 6, wherein the substrate comprises a textile, such as a woven or nonwoven textile, preferably wherein the textile comprises a plurality of fibers comprising a natural fiber, a synthetic fiber, or a blend of natural and synthetic fibers; optionally wherein the natural fiber comprises a cotton, wool, ramie, linen, bamboo, jute, hemp, or viscose; optionally wherein the synthetic fiber comprises polyester, nylon, rayon, polyolefin.

8. The treated substrate of claim 6 or claim 7, wherein the substrate comprises a solid polymeric foam, preferably wherein the solid polymeric foam comprises a polyurethane, a polyacrylic, or a latex foam.

9. The treated substrate of any of claim 6 to claim 8, wherein the coating is adhered to the surface of the substrate, attached to the surface of the substrate by chemical bond, or otherwise associated with the surface of the substrate.

10. The treated substrate of any of claim 6 to claim 9, wherein the TCA increases the temperature at which the PCM begins to recrystallize.

## Patentansprüche

1. Wärmemanagementformulierung zum Behandeln einer Faser, eines Textils oder eines Schaums, wobei die Formulierung ein mikroverkapseltes Phasenwechselmaterial ("mPCM"), ein Wärmeleitfähigkeitsadditiv ("TCA") und Wasser umfasst, wobei das TCA ein anorganisches Material, ausgewählt aus Graphit, Graphen, Zinkoxid und Aluminiumoxid, einschließlich kalziniertem Aluminiumoxid, mit einer Wärmeleitfähigkeit von mehr als 10 W/m · K umfasst, und wobei das mPCM ein PCM umfasst, umfassend ein Salzhydrat; eine Fettsäure oder Derivat davon; oder ein Alkan, wie z. B. eine Oleochemikalie oder ein Paraffin, wobei das mPCM und das TCA in der Formulierung in einem Gewichtsverhältnis von PCM : TCA von etwa 1.5 : 1 bis etwa 14 : 1, wie z. B. von etwa 2 : 1 bis etwa 12 : 1 oder von etwa 7 : 1 bis etwa 10 : 1 vorhanden sind, und wobei die Formulierung eine Dispersion des mPCM und des TCA in dem Wasser ist.

2. Wärmemanagementformulierung nach Anspruch 1, wobei das mPCM in der Formulierung in einer Menge von mindestens etwa 10 % (w/w), wie z. B. mindestens etwa 20 % (w/w) oder mindestens etwa 30 % (w/w) vorhanden ist, und/oder wobei das TCA in einer Menge von mindestens etwa 1 %, wie z. B. mindestens etwa 3 % oder mindestens etwa 5 % vorhanden ist.

3. Wärmemanagementformulierung nach einem beliebigen der vorhergehenden Ansprüche, wobei das mPCM ein PCM umfassend Octadecan umfasst.

4. Wärmemanagementformulierung nach einem beliebigen der vorhergehenden Ansprüche, wobei das TCA ein teilchenförmiges Material umfassend eine maximale Teilchengröße von weniger als 1 mm, vorzugsweise eine durchschnittliche Teilchengröße von 0,001 mm bis 0,010 mm, ist.

5. Wärmemanagementformulierung nach einem beliebigen der vorhergehenden Ansprüche, ferner umfassend ein Bindemittel, wobei das Bindemittel gegebenenfalls Styrol, Acryl, Styrol-Acryl oder Urethan umfasst, und/oder ferner umfassend ein Flammschutzmittel, wobei das Flammschutzmittel gegebenenfalls ein Organophosphat ist.

6. Behandeltes Substrat, umfassend ein Substrat und eine Beschichtung auf mindestens einem Teil einer Oberfläche des Substrats, wobei die Beschichtung durch Behandeln des Substrats mit der Wärmemanagementformulierung nach einem beliebigen der Ansprüche 1 - 5 erhalten wird und wobei das Substrat ein Textil, eine Faser oder einen Schaumstoff umfasst.

7. Behandeltes Substrat nach Anspruch 6, wobei das Substrat ein Textil, wie z. B. ein gewebtes oder nicht gewebtes Textil, umfasst, wobei das Textil vorzugsweise eine Vielzahl von Fasern, umfassend eine natürliche Faser, eine synthetische Faser oder eine Mischung aus natürlichen und synthetischen Fasern umfasst, wobei die natürliche Faser gegebenenfalls eine Baumwolle, Wolle, Ramie, Leinen, Bambus, Jute, Hanf oder Viskose umfasst, wobei die synthetische Faser gegebenenfalls Polyester, Nylon, Rayon, Polyolefin umfasst.

8. Behandeltes Substrat nach Anspruch 6 oder Anspruch 7, wobei das Substrat einen festen Polymerschaum umfasst, wobei der feste Polymerschaum vorzugsweise einen Polyurethan-, einen Polyacryl- oder einen Latexschaum umfasst.

9. Behandeltes Substrat nach einem beliebigen von Anspruch 6 bis Anspruch 8, wobei die Beschichtung an der Oberfläche des Substrats anhaftet, durch chemische Bindung an der Oberfläche des Substrats angebracht ist oder anderweitig mit der Oberfläche des Substrats verbunden ist.

10. Behandeltes Substrat nach einem beliebigen von Anspruch 6 bis Anspruch 9, wobei das TCA die Temperatur erhöht, bei der das PCM zu rekristallisieren beginnt.

## Revendications

1. Formulation de gestion thermique pour traiter une fibre, un textile ou une mousse, la formulation comprenant un matériau à changement de phase microencapsulé (« mPCM »), un additif de conductivité thermique (« TCA ») et de l'eau,
dans laquelle le TCA comprend un matériau inorganique choisi parmi le graphite, le graphène, l'oxyde de zinc et l'oxyde d'aluminium, y compris l'oxyde d'aluminium calciné, avec une conductivité thermique supérieure à 10 W/m·K, et le mPCM comprend un PCM comprend un sel hydraté ; un acide gras ou un dérivé de celui-ci ; ou un alcane tel qu'un produit oléochimique ou une paraffine, le mPCM et le TCA sont présents dans la formulation dans un rapport en poids de PCM : TCA d'environ 1,5 : 1 à environ 14 : 1, par exemple d'environ 2 : 1 à environ 12 : 1 ou d'environ 7 : 1 à environ 10 : 1, et la formulation est une dispersion du mPCM et du TCA dans l'eau.

2. Formulation de gestion thermique selon la revendication 1,
dans laquelle le mPCM est présent dans la formulation dans une quantité d'au moins environ 10 % en poids, par exemple d'au moins environ 20 % en poids ou d'au moins environ 30 % en poids, et/ou le TCA est présent dans une quantité d'au moins environ 1 %, par exemple d'au moins environ 3 % ou d'au moins environ 5 %.

3. Formulation de gestion thermique selon l'une des revendications précédentes,
dans laquelle le mPCM comprend un PCM comprenant de l'octadécane.

4. Formulation de gestion thermique selon l'une des revendications précédentes,
dans laquelle le TCA est un matériau particulaire présentant une taille de particule maximale inférieure à 1 mm, de préférence une taille de particule moyenne comprise entre 0,001 mm et 0,010 mm.

5. Formulation de gestion thermique selon l'une des revendications précédentes,
comprenant en outre un liant, optionnellement le liant comprenant du styrène, de l'acrylique, du styrène-acrylique ou de l'uréthane, et/ou comprenant en outre un retardateur de flamme, optionnellement le retardateur de flamme étant un organophosphate.

6. Substrat traité comprenant un substrat et un revêtement sur au moins une partie de la surface du substrat,
dans lequel le revêtement est obtenu en traitant le substrat avec la formulation de gestion thermique selon l'une des revendications 1 à 5, et le substrat comprend un textile, une fibre ou une mousse.

7. Substrat traité selon la revendication 6,
dans lequel le substrat comprend un textile, tel qu'un textile tissé ou non tissé, de préférence le textile comprend une pluralité de fibres comprenant une fibre naturelle, une fibre synthétique, ou un mélange de fibres naturelles et synthétiques ; optionnellement la fibre naturelle comprend un coton, une laine, une ramie, un lin, un bambou, une jute, un chanvre, ou une viscose ; optionnellement la fibre synthétique comprend un polyester, un nylon, une rayonne, une polyoléfine.

8. Substrat traité selon la revendication 6 ou la revendication 7,
dans lequel le substrat comprend une mousse polymère solide, de préférence la mousse polymère solide comprend un polyuréthane, un polyacrylique ou une mousse de latex.

9. Substrat traité selon l'une des revendications 6 à 8,
dans lequel le revêtement est collé à la surface du substrat, attaché à la surface du substrat par liaison chimique, ou associé d'une autre manière à la surface du substrat.

10. Substrat traité selon l'une des revendications 6 à 9,
dans lequel le TCA augmente la température à laquelle le PCM commence à recristalliser.
